# DEMANDE DE BREVET EUROPEEN

(11) **EP 2 316 982 A2**
(43) Date de publication de la demande: **04.05.2011**
(21) Numéro de dépôt: 10177986.6
(22) Date de dépôt: 22.05.2003
(51) Int. Cl.: C22C 45/00, C22C 45/10, A47J 36/02

(54) **Surface de cuisson facile à nettoyer et article électroménager comportant une telle surface**

(30) Priorité: 30.05.2002 FR 0206644
(62) Demande divisionnaire de: 03756003.4
(71) Demandeur: SEB SA, 69130 Ecully (FR)
(72) Inventeur: Coudurier, Alain, 73410, ALBENS (FR)
(74) Mandataire: Cémeli, Eric Philippe Laurent

(57) **Abrégé**

L'invention concerne une surface de cuisson d'aliment pour ustensile de cuisine ou appareil de cuisson, cette surface de cuisson étant en alliage métallique.

Selon l'invention, cette surface de cuisson est en alliage métallique amorphe présentant une phase nanocristalline.

## Description

La présente invention concerne le domaine des articles destinés à la préparation et à la cuisson des aliments et plus particulièrement la surface de cuisson de ces articles en contact avec les aliments à traiter.

Depuis de nombreuses années, des efforts importants ont été développés afin de faciliter la préparation quotidienne des repas. Parmi les progrès notables, les revêtements à base de polymères fluorocarbonés en tant que revêtement anti-adhésifs dans les ustensiles de cuisine se sont rapidement développés depuis la fin des années 1950. De tels revêtements sont mondialement connus depuis que le procédé présenté dans le brevet FR 1120749 a permis une fixation sûre de tels revêtements sur des métaux divers, tel l'aluminium.

Toutefois, de tels revêtements restent fragiles. Ainsi, des astuces ont été développées afin de renforcer mécaniquement la couche sur son support. De nombreux brevets de perfectionnement décrivent des méthodes et moyens permettant d'accroître la résistance aux rayures de tels revêtements, en agissant sur le revêtement et/ou sur le substrat. Malgré tout, de tels revêtements restent sensibles à l'usage répété de matériaux métalliques aiguisés ou pointus, tels des couteaux ou fourchettes.

Parallèlement, des développements ont été menés sur des surfaces résistantes mécaniquement dont on a essayé d'améliorer la facilité de nettoyage. Des dépôts métalliques, tels le chromage sur inox, les quasi-cristaux, ou non métalliques (silicates,...) sont ainsi apparus.

Les quasi-cristaux sont une phase ou composé métallique présentant, au niveau cristallographique, des symétries de rotation d'axe d'ordre 5, 8, 10 ou 12, comme les phases isocaédriques et décagonales. De tels revêtements sont notamment décrits dans le brevet EP 0 356 287 et présentent des qualités de résistance à la rayure, voire d'anti-adhérence dans certains cas.

Par ailleurs, le document FR 2784280 décrit une surface de cuisson composite constituée de deux phases céramique et métallique destinées à apporter aux fonds d'ustensile de cuisine traités, une non-déformabilité dans leur domaine d'application, ainsi qu'une bonne résistance à l'usure. Cependant, de tels revêtements ne présentent pas de très bonnes performances en ce qui concerne leur facilité de nettoyage, de sorte que l'ajout d'un lubrifiant solide, tel le PTFE, est souvent recommandé lorsque cette fonction est recherchée. Cette étape supplémentaire entraîne globalement un coût important pour l'élaboration d'une telle surface de cuisson.

La présente invention vise à remédier aux inconvénients précités de l'art antérieur, en proposant une surface de cuisson aux caractéristiques améliorées de résistance à la rayure, de facilité de nettoyage, de résistance à la corrosion.

La présente invention est atteinte par une surface de cuisson d'aliment pour ustensile de cuisine ou appareil de cuisson, **caractérisée en ce que** cette surface de cuisson est en alliage métallique amorphe.

L'utilisation d'alliages métalliques amorphes, encore appelés verres métalliques apporte des propriétés intéressantes en terme de propriétés de surface (dureté notamment), et d'anti-corrosion. En effet, l'absence de phase cristalline entraîne l'absence des défauts du solide cristallin (dislocations, joints de grain,...) et les phénomènes induits par ces défauts (notamment la corrosion aux joints de grains).

Selon la formulation et la mise en oeuvre de l'alliage, la présence d'une phase nanocristalline peut être observée. Toutefois, la structure nanocristalline possède des propriétés voisines de la structure amorphe, de par l'absence d'ordre atomique à grande distance, du moins en ce qui concerne les caractéristiques recherchées, telles que précédemment mentionnées. On pourrait même s'attendre à une légère amélioration de la tenue à chaud, notamment en ce qui concerne sa dureté.

D'une manière surprenante, il a été constaté, au cours d'essais, que certains revêtements d'alliages métalliques amorphes présentaient également des propriétés de facilité de nettoyage, qui peut être aussi exprimée par la possibilité d'enlever facilement des éléments carbonisés sur la surface de cuisson. Toutefois, parmi ces alliages, certains ne sont pas compatibles avec le contact alimentaire.

Ainsi, avantageusement, l'alliage a pour formule AₐD_{b}E_{c}X_{d} dans laquelle :
- A est l'un des éléments Zr ou Cu,
- D est au moins un élément choisi dans le groupe constitué de Ni, Cu, Al si A est Zr ou au moins un élément choisi dans le groupe constitué de Ni, Zr, Al si A est Cu,
- E est au moins un élément choisi dans le groupe constitué de Ti, Hf,
- X représente les impuretés d'élaboration, avec :
   - 40 % < a < 70 % at.,
   - 5 % < b < 30 % at.,
   - c < 10 % at.,
   - d <1 % at, et
   a+b+c+d=100%at.

II est important de noter que cette sélection a déjà été effectuée parmi les alliages pouvant être rendus amorphes. De plus, d'autres éléments ont volontairement été écartés par leur toxicité vis-à-vis de l'être humain. Les revêtements proposés n'apportent donc aucune toxicité dans les aliments en contact, même portés à haute température.

Par ailleurs, la sélection des constituants de l'alliage a également tenu compte des éléments qui favorisent la germination des cristaux, afin de limiter ce phénomène.

Les teneurs en différents éléments sont le résultat de conditions de mise en oeuvre, complétés par des essais concernant la résistance à l'abrasion et la facilité de nettoyage de tels revêtements après des cuissons difficiles.

II est également tenu compte des compositions eutectiques qui présentent une température de fusion basse ainsi qu'une plus faible viscosité du liquide, favorables à l'obtention de l'état amorphe.

Les différents essais ont montré d'une manière inattendue qu'une proportion importante de zirconium permet d'obtenir des revêtements présentant une facilité de nettoyage exceptionnelle.

De plus, des études ont montré que les alliages comportant au moins trois éléments sont plus stables que les alliages binaires, et sont d'autant plus stables que le nombre d'éléments est important.

Les alliages réalisés restent notamment stables, sans transformation structurelle, lorsqu'ils sont portés à des températures de l'ordre de 300 °C, températures qui sont supérieures aux températures couramment utilisées pour la cuisson alimentaire.

Par ailleurs, le zirconium permet également d'augmenter davantage la stabilité thermique de l'alliage final.

Selon une réalisation avantageuse de la présente invention, l'alliage métallique est de formulation ZrₐCU_{b}Ni_{c}Al_{d}TiₑX_{f}, où a, b, c, d, e, sont les proportions respectives en Zr, Cu, Ni, Al et Ti de l'alliage, lesdites proportions étant comprises dans les intervalles suivants:
- 40 % < a < 70 %
- 10 % < b < 25 %
- 5 % < c < 15 %
- 5 % < d < 15 %
- 2 % < e < 10 %,
et où X représente les impuretés d'élaboration, avec f < 1 % at. Dans cette formulation, a + b +c + d + e + f = 100 % at.

Les éléments entrant dans la composition de ces alliages ont été sélectionnés notamment afin que l'alliage correspondant présente une température de transition vitreuse élevée. Les compositions ont été a priori définies pour se rapprocher des compositions correspondant à des eutectiques afin de diminuer la température du liquide, ce qui permet des vitesses de refroidissement plus faibles pour obtenir l'état amorphe avec présence ou non de phase nanocristalline.

Bien entendu, la composition des alliages a été orientée également par les propriétés visées de résistance mécanique, d'anti-corrosion et de facilité de nettoyage de l'alliage obtenu.

Selon un premier mode de mise en oeuvre de l'invention, la surface de cuisson d'aliment pour ustensile de cuisine ou appareil de cuisson est obtenue par le dépôt d'une épaisseur appropriée du matériau métallique sur un substrat. Ce dépôt peut être réalisé par l'un ou l'autre des procédés suivants : projection thermique d'une poudre d'une granulométrie adéquate, dépôt par électrophorèse d'une poudre micro ou sub-micronique, pulvérisation cathodique d'une cible massive. Dans ce dernier cas la cible peut être obtenue par assemblage sur un substrat de cuivre d'une ou plusieurs tôles ou plaques de matériau ayant la composition recherchée, lesdites tôles ou plaques étant obtenues soit par frittage de poudre ou projection thermique de poudre, soit issues de coulée. D'autres techniques, telles le compactage à chaud ou le dépôt par électrolyse peuvent également être utilisées.

Cette mise en oeuvre présente l'avantage d'utiliser peu de matière et de pouvoir ajuster l'épaisseur de la surface de cuisson.

Toutes ces techniques permettent, par ailleurs, d'obtenir des dépôts en forte cohésion avec le substrat sur lequel ils sont déposés. Les risques de dégradation du dépôt par des objets pointus de type couteau ou fourchette sont donc très faibles.

Le matériau déposé dans les procédés précédemment décrits peut être issu d'une poudre, amorphe à l'origine ou bien obtenue par broyage d'un alliage cristallisé, ladite poudre subissant ensuite une étape de vitrification avant l'étape de dépôt ou lors de l'étape de dépôt, selon la technique utilisée. Dans ce mode opératoire, l'idée est donc d'obtenir la phase amorphe en tout dernier lieu.

Selon un second mode de mise en oeuvre de l'invention, la surface de cuisson d'aliment pour ustensile de cuisine ou appareil de cuisson est obtenue par assemblage d'une tôle en alliage amorphe avec présence ou non d'une phase nanocristalline sur un substrat. Cette mise en oeuvre présente l'avantage de se rapprocher des mises en oeuvre connues d'assemblage des métaux, ce qui permet de pouvoir adapter des techniques connues sans développement spécifique important.

Selon un mode opératoire, la tôle est obtenue par laminage d'un lingot amorphe issu d'une fusion d'un mélange de métaux. II est particulièrement intéressant, d'un point de vue économique, d'utiliser la méthode de fusion puis laminage, notamment dans le cas des amorphes, car ils présentent un taux de réduction par laminage, à température maîtrisée, important.

Selon un autre procédé d'élaboration, la tôle est obtenue par la technique de solidification à la roue.

Cette technique, en solidifiant l'alliage métallique sur une roue refroidie animée d'un mouvement de rotation, permet d'obtenir des vitesses de refroidissement suffisamment élevées pour qu'un film amorphe puisse se former. Les épaisseurs obtenues, pouvant atteindre 0,1 mm, sont tout à fait compatibles avec l'usage envisagé, sans qu'il soit nécessaire d'effectuer un laminage ultérieur.

Dans ce second mode de mise en oeuvre de l'invention, l'assemblage de la tôle sur le substrat est réalisé par l'une des techniques suivantes : colaminage, brasage, frappe à chaud, d'une manière connue en soi.

Avantageusement, la tôle et le substrat subissent, après assemblage, une étape de mise en forme par emboutissage.

D'autres avantages issus des essais apparaîtront à la lecture de la description qui va suivre, en relation avec un exemple d'illustration de la présente invention donné à titre d'exemple non limitatif.

L'exemple de réalisation de l'invention concerne un substrat massif d'alliage amorphe de composition Zr₆₀CU_{17,5}Ni₁₀Al_{7,5}Ti₅ obtenu par fusion en creuset inductif d'un lingot massif refroidi dans un moule en cuivre selon des conditions entraînant la formation d'un alliage amorphe. Une face de ce substrat a subi un polissage poussé, proche du poli optique, avant la réalisation d'essais, afin de la rendre comparable à d'autres surfaces de cuisson pour que les essais d'évaluation de la facilité à nettoyer une telle surface, dans une utilisation de cuisson domestique, puissent être comparés.

Le système d'évaluation de la facilité de nettoyage permet de quantifier les capacités d'une surface de cuisson à retrouver son aspect d'origine après usage. Ce système d'évaluation comprend les étapes suivantes :
- la surface est localement recouverte d'un mélange alimentaire de composition connue,
- ce mélange est carbonisé dans un four dans des conditions définies, par exemple 210 °C pendant 20 minutes,
- après refroidissement, la surface est mise à tremper pendant un temps contrôlé dans un mélange d'eau et de détergent,
- un tampon abrasif est ensuite appliqué sous une contrainte définie à l'aide d'un appareil à abraser (plynomètre) sur la surface souillée dans un mouvement de va-et-vient pendant un nombre donné de cycles,
- le pourcentage de la surface correctement nettoyée est noté et caractérise la facilité de nettoyage de la surface de cuisson.

Les essais menés sur différents types de surface permettent ainsi d'évaluer comparativement la qualité des surfaces quant à leur facilité de nettoyage. Bien entendu, les essais sont réalisés en respectant les mêmes paramètres pour chaque étape du système d'évaluation : même mélange alimentaire, même surface d'application du mélange alimentaire, même température de carbonisation,...

Le tableau comparatif suivant montre les résultats obtenus sur trois surfaces de cuisson différentes, à savoir un inox poli, un quasi-cristaux, et l'alliage amorphe de formulation Zr₆₀Cu_{17,5}Ni₁₀Al_{7,5}Ti₅ tel que précédemment décrit, dans un test sévère avec une composition alimentaire à base de lait et de riz réputée comme difficile à nettoyer une fois carbonisée. Un tel test permet ainsi de bien mettre en évidence les différences entre la qualité de nettoyage des surfaces.

| | Inox poli | Quasi-cristaux | Amorphe |
|---|---|---|---|
| Quantité de résidu carbonisé enlevée | 25% | 30 % | 90 % |

Le tableau montre sans ambiguïté les résultats exceptionnels obtenus avec l'alliage amorphe.

II est à noter que le nombre de cycles d'abrasion sur le plynomètre a été fixé à 10. Ce faible nombre de cycles met bien en évidence la qualité de facilité de nettoyage de la surface amorphe puisqu'il ne reste plus que 10 % de la surface souillée après seulement 10 mouvements de va-et-vient du tampon abrasif.

Des essais répétitifs après nettoyage complet de la surface montrent que la facilité de nettoyage de l'alliage amorphe n'est pas altérée.

Lorsque la mise en oeuvre de l'invention implique l'utilisation d'un substrat, celui-ci est alors composé d'une ou plusieurs tôle(s) métallique(s) des matériaux suivants : aluminium, inox, fonte, acier, cuivre. Cependant, la présente invention n'est pas limitée à la réalisation d'une couche de faible épaisseur d'un alliage métallique amorphe avec ou non la présence d'une phase nanocristalline déposée ou assemblée sur un substrat épais, mais vise également à la réalisation de matériau massif, avec ou sans substrat, ce dernier, lorsqu'il est présent, n'ayant pas un rôle de support mécanique de la couche, mais assurant une autre fonction, telle que la répartition thermique de la chaleur pour un ustensile posé sur une source de chaleur (poêle, casseroles,...).

## Revendications

1. Surface de cuisson d'aliment pour ustensile de cuisine ou appareil de cuisson, cette surface de cuisson étant en alliage métallique, **caractérisée en ce que** cette surface de cuisson est en alliage métallique amorphe présentant une phase nanocristalline.

2. Surface de cuisson d'aliment pour ustensile de cuisine ou appareil de cuisson selon la revendication 1, **caractérisée en ce que** l'alliage a pour formule AₐD_{b}E_{c}X_{d} dans laquelle :
- A est l'un des éléments Zr ou Cu,
- D est au moins un élément choisi dans le groupe constitué de Ni, Cu, Al si A est Zr ou au moins un élément choisi dans le groupe constitué de Ni, Zr, Al si A est Cu,
- E est au moins un élément choisi dans le groupe constitué de Ti, Hf,
- X représente les impuretés d'élaboration, avec:
- 40 % < a < 70 % at.,
- 5 % < b < 30 % at.,
- c < 10 % at.,
- d <1 % at, et
a + b + c + d = 100 % at.

3. Surface de cuisson d'aliment pour ustensile de cuisine ou appareil de cuisson selon la revendication 2, **caractérisée en ce que** l'alliage est de formulation ZrₐCu_{b}Ni_{c}Al_{d}TiₑX_{f},
- où a, b, c, d, e, sont les proportions respectives en Zr, Cu, Ni, Al et Ti de l'alliage, lesdites proportions étant comprises dans les intervalles suivants :
- 40 % < a < 70 %
- 10 % < b < 25 %
- 5 % < c < 15 %
- 5 % < d < 15 %
- 2 % < e < 10 %,
- où X représente les impuretés d'élaboration, avec f < 1 % at,
- où a + b + c + d + e + f = 100 % at.

4. Surface de cuisson d'aliment pour ustensile de cuisine ou appareil de cuisson selon l'une des revendications 1 à 3 **caractérisée en ce qu'**elle est obtenue par le dépôt d'une épaisseur appropriée d'alliage sur un substrat.

5. Surface de cuisson d'aliment pour ustensile de cuisine ou appareil de cuisson selon la revendication 4, **caractérisée en ce que** le dépôt est réalisé par pulvérisation cathodique d'une cible massive.

6. Surface de cuisson d'aliment pour ustensile de cuisine ou appareil de cuisson selon la revendication 5, **caractérisée en ce que** la cible est obtenue par assemblage sur un substrat de cuivre d'une ou plusieurs tôles ou plaques de matériau ayant la composition recherchée, lesdites tôles ou plaques étant obtenues soit par frittage de poudre ou projection thermique de poudre, soit issues de coulée.

7. Surface de cuisson d'aliment pour ustensile de cuisine ou appareil de cuisson selon l'une des revendications 4 à 6, **caractérisée en ce que** le matériau est issu d'une poudre d'alliage obtenue par broyage d'un alliage cristallisé, ladite poudre subissant ensuite une étape de vitrification.

8. Surface de cuisson d'aliment pour ustensile de cuisine ou appareil de cuisson selon l'une des revendications 1 à 3, **caractérisée en ce qu'**elle est obtenue par assemblage d'une tôle en alliage métallique amorphe présentant une phase nanocristalline sur un substrat.

9. Surface de cuisson d'aliment pour ustensile de cuisine ou appareil de cuisson selon la revendication 8, **caractérisée en ce que** la tôle est obtenue par laminage d'un lingot en alliage métallique amorphe présentant une phase nanocristalline issu d'une fusion d'un mélange de métaux.

10. Surface de cuisson d'aliment pour ustensile de cuisine ou appareil de cuisson selon la revendication 8, **caractérisée en ce que** la tôle est obtenue par la technique de solidification à la roue.

11. Surface de cuisson d'aliment pour ustensile de cuisine ou appareil de cuisson selon l'une des revendications 8 à 10, **caractérisée en ce que** l'assemblage est réalisé par l'une des techniques suivantes : colaminage, brasage, frappe à chaud.

12. Surface de cuisson d'aliment pour ustensile de cuisine ou appareil de cuisson selon l'une des revendications 8 à 11, **caractérisée en ce que** la tôle et le substrat subissent, après assemblage, une étape de mise en forme par emboutissage.

13. Surface de cuisson d'aliment pour ustensile de cuisine ou appareil de cuisson selon l'une des revendications 4 à 12, **caractérisée en ce que** le substrat est composé d'une ou plusieurs tôle(s) métallique(s) des matériaux suivants : aluminium, inox, fonte, acier, cuivre.
